# DEMANDE DE BREVET EUROPEEN

(11) **EP 2 413 235 A1**
(43) Date de publication de la demande: **01.02.2012**
(21) Numéro de dépôt: 11175280.4
(22) Date de dépôt: 26.07.2011
(51) Int. Cl.: G06F 3/12, H04L 29/08

(54) **Système d'impression, client d'impression et imprimante, et procédés, programmes d'ordinateur et moyens de stockage correspondants**

(30) Priorité: 28.07.2010 FR 1056219
(71) Demandeur: SAGEMCOM DOCUMENTS SAS, 92500 Rueil Malmaison (FR)
(72) Inventeur: Sartori, David, 92500 RUEIL MALMAISON (FR)
(74) Mandataire: Maillet, Alain

(57) **Abrégé**

Un réseau de communication comprend un client d'impression et une imprimante par laquelle un utilisateur désire effectuer une impression de document. Le client d'impression stocke un fichier décrivant un document à imprimer. L'imprimante accède aléatoirement (6.10), via le réseau de communication, au fichier stocké sur le client d'impression et le client d'impression permet à l'imprimante d'accéder aléatoirement, via le réseau de communication, au fichier. Si le fichier décrit le document à imprimer dans un langage interprété, l'imprimante interprète le fichier en utilisant des accès aléatoires au fichier sur le client d'impression, via le réseau de communication. Si le fichier en langage interprété comprend des objets et des références à ces objets, l'imprimante obtient (6.7) le fichier par tronçons, les tronçons étant déterminés (6.6) en fonction des références contenues dans le fichier.

## Description

La présente invention concerne un système d'impression, un client d'impression et une imprimante. La présente invention concerne également des procédés mis en oeuvre par ce système d'impression, ce client d'impression et cette imprimante. La présente invention concerne également des programmes d'ordinateur permettant la mise en oeuvre de ces procédés et des moyens de stockage stockant de tels programmes d'ordinateur.

Aujourd'hui, une impression réseau implique un serveur, par exemple implémenté dans une imprimante, et un client d'impression dans un programme pilote d'imprimante installé sur un ordinateur, qui prend en entrée des documents formatés par des logiciels, par exemple de bureautique, et les transmet dans une file d'attente d'impression (spooler en anglais) dudit serveur, créant ainsi des travaux d'impression. Un travail d'impression consiste en une opération d'impression à réaliser ou en cours de réalisation à laquelle sont associés un fichier décrivant un document à imprimer et des paramètres nécessaires à l'impression de ce document.

Un document consiste en un contenu, c'est-à-dire un ensemble de données informatives lisibles par l'homme ou une machine et imprimables, mis en forme. Un document est par exemple du texte et/ou des illustrations mis en forme. Un document est fourni et stocké sous la forme d'un fichier informatique décrivant le document. Un tel fichier peut décrire le document dans un langage interprété qui permet par interprétation du fichier de reproduire le document. Une impression d'un tel document consiste en une mise sur un support physique, tel que du papier, du contenu mis en forme à partir du fichier informatique décrivant le document.

Les imprimantes réseau actuellement disponibles sur le marché comprennent des interpréteurs de données au format PDL (Page Description Language en anglais ou Langage de Description de Page en français). De telles imprimantes comprennent notamment un interpréteur de données au format PostScript®. Un fichier au format PostScript® décrit le document page après page. Pour l'interpréter, on effectue des accès séquentiels. Il est alors possible grâce au format PostScript® pour une imprimante réseau comportant un interpréteur de fichiers au format PostScript®, d'effectuer une interprétation des données au fur et à mesure de leur réception, la description du document à imprimer étant séquentielle. On parle alors de transmission en mode connecté (streaming mode en anglais). Une connexion TCP/IP (*Transmission Control Protocol* / *Internet Protocol* en anglais défini par les RFC 791 et 793 ou *Protocole de Contrôle de Transmission* / *Protocole Internet* en français) est ouverte entre un client d'impression et l'imprimante. Le client d'impression transmet des données, attend l'acquittement des trames TCP correspondantes de la part de l'imprimante, puis transmet les données suivantes dans un ordre de lecture séquentielle du fichier, et ainsi de suite. Le format PostScript® permet donc, de manière native, d'imprimer les pages indépendamment les unes des autres. Cela permet de limiter les ressources de stockage nécessaires à l'imprimante pour imprimer un document, ce qui permet de développer des imprimantes à capacité de stockage limitées et de réduire ainsi leur coût de production.

Cependant, tous les langages de description de document n'ont pas cette structure séquentielle. L'interprétation d'une page d'un document qui n'a pas cette structure séquentielle nécessite typiquement l'intégralité du fichier.

Une solution pour pouvoir imprimer un tel document sur une imprimante est alors que le client d'impression transmette l'intégralité du fichier à l'imprimante. Cela implique que l'imprimante dispose de capacités de stockage suffisantes pour stocker l'intégralité du fichier. Les imprimantes réseau haut de gamme disposant d'un disque dur (hard disk drive en anglais) interne sont adaptées à ce type de mécanisme d'impression. Lorsque l'imprimante ne dispose pas de telles capacités de stockage, une autre solution est que le client d'impression convertit le document en un format avec une structure séquentielle de description du document à imprimer, tel que le format PostScript®, et qui permet une transmission en mode connecté. Une telle conversion implique une plus grande utilisation de ressources de traitement au niveau du client d'impression.

Il est souhaitable de pallier ces différents inconvénients de l'état de la technique.

Il est notamment souhaitable de fournir une solution d'impression qui permette d'imprimer un document avec une imprimante ne disposant pas de capacités de stockage pour stocker l'intégralité du fichier décrivant le document à imprimer.

Il est notamment souhaitable de fournir une solution d'impression qui permette de minimiser l'utilisation de ressources de traitement et/ou de stockage lors de l'impression d'un document.

Il est notamment souhaitable de fournir une solution d'impression qui permette l'impression d'un document décrit dans un fichier selon un langage interprété, tout en minimisant l'utilisation de ressources de traitement par un client d'impression fournissant ce fichier et/ou de stockage par une imprimante par laquelle l'impression du document doit être effectuée.

Il est notamment souhaitable de fournir une solution d'impression qui permette l'impression d'un document décrit dans un fichier selon un langage interprété, le fichier comprenant des objets et des références à ces objets, tout en minimisant l'utilisation de ressources de traitement par un client d'impression fournissant ce fichier et/ou de stockage par une imprimante par laquelle l'impression du document doit être effectuée.

L'invention concerne une imprimante destinée à être connectée à un réseau de communication comportant un client d'impression, le client d'impression étant prévu pour stocker, pour chaque document à imprimer, un fichier décrivant ledit document à imprimer. L'imprimante comporte des moyens pour accéder aléatoirement, via le réseau de communication, au fichier stocké par le client d'impression et qui décrit le document à imprimer. Ainsi, aucune conversion de format de fichier n'est effectuée par le client d'impression et l'utilisation de ses ressources de traitement est minimisée. De plus, une imprimante à capacités de stockage réduites peut être utilisée, le fichier restant stocké sur le client d'impression.

Selon un mode de réalisation particulier, l'imprimante comporte des moyens pour interpréter le fichier auquel elle accède par les moyens d'accès lorsque ledit fichier décrit le document à imprimer dans un langage interprété.

Selon un mode de réalisation particulier, l'imprimante comporte :
- des moyens pour transmettre au client d'impression une requête afin d'obtenir un tronçon du fichier décrivant le document à imprimer ;
- des moyens pour recevoir ledit tronçon.

Selon un mode de réalisation particulier, pour accéder à un objet du fichier décrivant le document à imprimer, ledit objet décrivant au moins un élément dudit document à imprimer, l'imprimante comporte des moyens pour déterminer un tronçon dudit fichier en fonction d'une référence audit objet contenue dans ledit fichier. Ainsi, il est possible pour une imprimante d'interpréter et d'imprimer des documents décrits dans des fichiers comportant des objets et des références à ces objets, tels que des fichiers au format PDF. De tels objets définissent un contenu et/ou la forme d'un contenu du document à imprimer, ou toute information nécessaire à l'impression du document. De telles références impliquent une lecture aléatoire du fichier.

Selon un mode de réalisation particulier, pour obtenir la référence à un objet du fichier décrivant le document à imprimer, l'imprimante comporte des moyens pour déterminer un tronçon incluant une table de références indiquant une localisation dudit objet dans ledit fichier. Ainsi, il est possible d'obtenir une information permettant d'accéder rapidement aux objets référencés.

Selon un mode de réalisation particulier, les moyens pour déterminer un tronçon incluant la table de références comportent :
- des moyens pour obtenir, auprès du client d'impression, la taille dudit fichier ;
- des moyens pour déterminer, en fonction de la taille obtenue, un tronçon incluant une information indiquant une localisation de la table de références ;
- des moyens pour obtenir, auprès du client d'impression, ledit tronçon incluant la table de références en fonction de l'information indiquant la localisation de la table de références.

Ainsi, il est possible d'obtenir rapidement accès à une information permettant d'accéder aux objets référencés. Ainsi, un fichier comprenant une table de références et une référence vers cette table de références, tel qu'un fichier au format PDF, peut être rapidement interprété.

Selon un mode de réalisation particulier, pour une page ou un groupe de pages à imprimer dudit document, des moyens pour déterminer, d'après ladite table de références obtenue, au moins un tronçon dudit fichier incluant au moins un objet référant à ladite page ou audit groupe de pages à imprimer sont activés. Ainsi, il est possible d'imprimer des pages du document à imprimer à moindre coût mémoire pour l'imprimante.

L'invention concerne également un client d'impression destiné à être utilisé dans un réseau de communication comportant au moins une imprimante, le client d'impression étant prévu pour stocker pour chaque document à imprimer, un fichier décrivant ledit document à imprimer. Le client d'impression comporte des moyens pour permettre à l'imprimante d'accéder aléatoirement, via le réseau de communication, au fichier stocké par le client d'impression et qui décrit le document à imprimer.

Selon un mode de réalisation particulier, le client d'impression comporte :
- des moyens pour recevoir une requête en provenance de l'imprimante, afin que celle-ci puisse obtenir un tronçon du fichier qui décrit le document à imprimer, et
- des moyens pour transmettre lesdits tronçons à l'imprimante.

L'invention concerne également un procédé mis en oeuvre par une imprimante dans un réseau de communication comportant en outre un client d'impression, le client d'impression étant prévu pour stocker, pour chaque document à imprimer, un fichier décrivant ledit document à imprimer. Le procédé est tel qu'il comprend une étape d'accès aléatoire, via le réseau de communication, de l'imprimante au fichier stocké sur le client d'impression et qui décrit le document à imprimer.

L'invention concerne également un procédé mis en oeuvre par un client d'impression dans un réseau de communication comportant en outre une imprimante, le client d'impression étant prévu pour stocker, pour chaque document à imprimer, un fichier décrivant ledit document à imprimer. Le procédé est tel qu'il comprend une étape consistant à permettre à l'imprimante d'accéder aléatoirement, via le réseau de communication, au fichier stocké par le client d'impression et qui décrit le document à imprimer.

L'invention concerne également un système d'impression destiné à être utilisé dans un réseau de communication, le système d'impression comportant un client d'impression et une imprimante, le client d'impression étant prévu pour stocker, pour chaque document à imprimer, un fichier décrivant ledit document à imprimer. Le système est tel que l'imprimante comporte des moyens pour accéder aléatoirement, via le réseau de communication, au fichier stocké sur le client d'impression et qui décrit le document à imprimer, et que le client d'impression comporte des moyens pour permettre à l'imprimante d'accéder aléatoirement, via le réseau de communication, au fichier stocké par le client d'impression et qui décrit le document à imprimer.

L'invention concerne également un procédé mis en oeuvre dans un réseau de communication comportant un client d'impression et une imprimante, le client d'impression étant prévu pour stocker pour chaque document à imprimer, un fichier décrivant ledit document à imprimer. Le procédé est tel que l'imprimante effectue une étape d'accès aléatoire, via le réseau de communication, au fichier stocké sur le client d'impression et qui décrit le document à imprimer, et que le client d'impression effectue une étape consistant à permettre à l'imprimante d'accéder aléatoirement, via le réseau de communication, au fichier stocké sur le client d'impression et qui décrit le document à imprimer.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter l'un des procédés d'impression mentionnées ci-dessus, lorsque ledit programme est exécuté par un système informatique ou un processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre un exemple de réseau de communication comprenant un système d'impression selon une réalisation de l'invention ;
- la Fig. 2 illustre un exemple de dispositif de communication tel que présent dans le réseau de communication de la Fig. 1 ;
- la Fig. 3 illustre un exemple d'architecture pour une gestion d'impression dans une imprimante selon une réalisation de l'invention ;
- la Fig. 4 illustre un exemple de fichier au format PDF ;
- la Fig. 5 illustre un algorithme mis en oeuvre par un client d'impression selon une réalisation de l'invention ;
- la Fig. 6 illustre un algorithme mis en oeuvre par une imprimante selon une réalisation de l'invention.

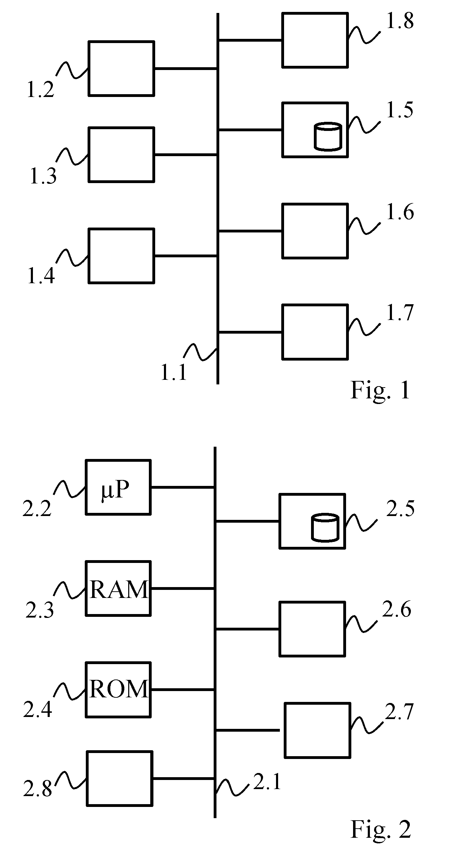

La Fig. 1 illustre un exemple de réseau de communication comprenant un système d'impression dans lequel l'invention peut être mise en oeuvre. Différents dispositifs de communication communiquent à l'aide d'un réseau de communication 1.1, typiquement un réseau local LAN (Local Area Network en anglais). Ce réseau peut fonctionner selon tout type de technologie filaire, par exemple Ethernet, ou sans fil, par exemple WiFi. Connectés à ce réseau se trouvent différents dispositifs de communication et notamment des postes 1.2, 1.3 et 1.4 comprenant des clients d'impression, susceptibles de lancer des commandes d'impression de documents, et des imprimantes 1.5, 1.6 et 1.7. Les postes 1.2, 1.3 et 1.4 sont typiquement des postes informatiques, ordinateurs de bureau, ordinateurs portables ou encore tout dispositif de traitement de l'information disposant de capacités de communication réseau. Par la suite on assimile les clients d'impression aux postes 1.2, 1.3, 1.4 dans lesquels ils sont compris. Les imprimantes 1.5, 1.6 et 1.7 peuvent recevoir des commandes d'impression et imprimer des documents correspondants. L'imprimante 1.5, représentée avec un disque dur interne, est dotée de capacités de stockage propres ; tandis que les imprimantes 1.6 et 1.7 en sont dépourvues. Une imprimante qui dispose de capacités de stockage propres peut implémenter un système local de file d'attente d'impression. Dans ce cas, les ordres d'impression ainsi que les documents à imprimer sont stockés à l'aide des capacités de stockage propres à l'imprimante. La file d'attente d'impression est alors directement gérée par l'imprimante sur ses capacités de stockage propres. Sinon, la file d'attente d'impression est typiquement gérée par un serveur d'impression 1.8 servant de relais entre le client d'impression et l'imprimante.

Le système d'impression dans lequel l'invention peut être mise en oeuvre comprend ainsi un client d'impression, à partir duquel un utilisateur va ordonner l'impression d'un document, dit document à imprimer, et une imprimante par laquelle l'utilisateur va pouvoir obtenir l'impression effective du document.

La Fig. 2 illustre un exemple de dispositif de communication du réseau de communication 1.1, tel qu'une imprimante 1.5, 1.6 ou 1.7 ou un poste 1.2, 1.3 ou 1.4 comprenant un client d'impression. Un tel dispositif de communication comprend, reliés par un bus de communication 2.1 :
- un processeur, micro-processeur (noté µP), microcontrôleur ou CPU (Central Processing Unit en anglais ou Unité Centrale de Traitement en français) 2.2 ;
- une mémoire vive RAM (Random Access Memory en anglais ou Mémoire à Accès Aléatoire en français) 2.3 ;
- une mémoire morte ROM (Read Only Memory en anglais ou Mémoire à Lecture Seule en français) 2.4 ;
- une interface de communication 2.6 avec le réseau de communication 1.1 ;
- une interface 2.7 vers des fonctions additionnelles ;
- éventuellement, une unité de stockage 2.5 ; et
- éventuellement, un lecteur 2.8 de medium de stockage, tel qu'un lecteur de CD-ROM (pour Compact Disk Read Only Memory en anglais ou Disque Compact Mémoire à Lecture Seule en français).

L'interface 2.7 permet l'accès à des fonctions additionnelles, dépendantes du dispositif de communication considéré, comme par exemple une fonction d'interface homme machine, une fonction de contrôle des mécanismes d'impression.

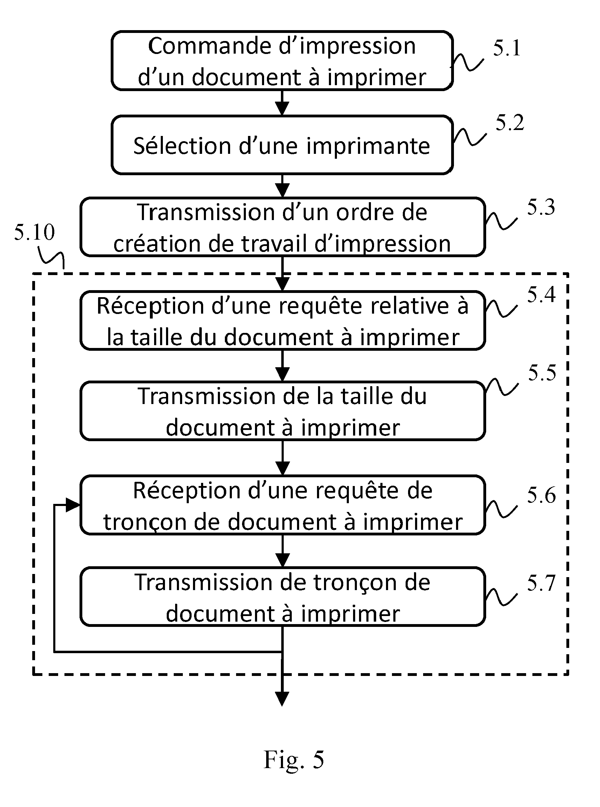

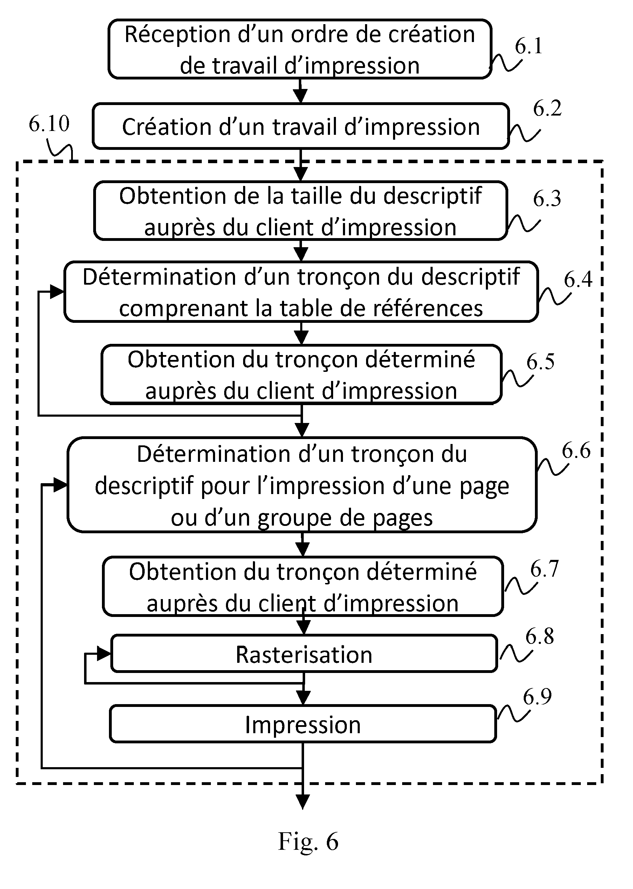

Le processeur 2.2 est capable d'exécuter des instructions chargées dans la RAM 2.3 à partir de la ROM 2.4, d'une mémoire externe (non représentée), d'un support de stockage, tel qu'un disque dur ou un CD-ROM, ou d'un réseau de communication. Lorsque le dispositif de communication est mis sous tension, le processeur 2.2 est capable de lire de la RAM 2.3 des instructions et de les exécuter. Ces instructions forment au moins un programme d'ordinateur. Ce(s) programme(s) d'ordinateur cause(nt) la mise en oeuvre, par le processeur 2.2, de tout ou partie des algorithmes décrits ci-après en relation avec les Figs. 5 et 6.

Tout ou partie des algorithmes décrits ci-après en relation avec les Figs. 5 et 6 peut être implémenté sous forme logicielle par exécution d'un ensemble d'instructions par une machine programmable, tel qu'un DSP (Digital Signal Processor en anglais ou Unité de Traitement de Signal Numérique en français) ou un microcontrôleur, ou être implémenté sous forme matérielle par une machine ou un composant dédié, tel qu'un FPGA (Field-Programmable Gate Array en anglais ou Matrice de Portes Programmable sur Champ en français) ou un ASIC (Application-Specific Integrated Circuit en anglais ou Circuit Intégré Spécifique à une Application en français).

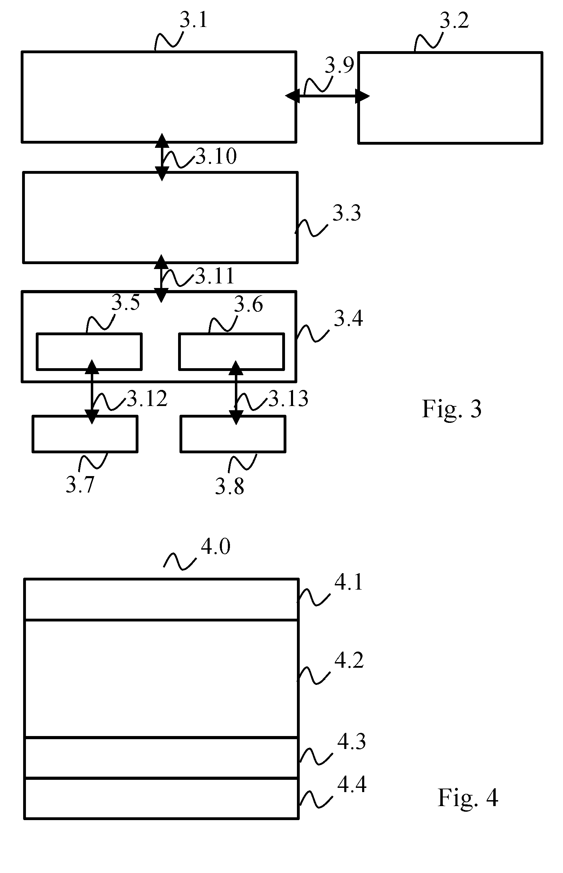

La Fig. 3 illustre un exemple d'architecture pour une gestion d'impression dans l'imprimante 1.6 ou 1.7.

L'architecture pour la gestion d'impression dans l'imprimante 1.6 ou 1.7 comprend :
- un module applicatif 3.1 en charge de piloter différents mécanismes de l'imprimante, tel que l'impression effective de pages, la transmission de données via le réseau de communication 1.1 ;
- un module interpréteur 3.2, qui interprète des fichiers décrivant des documents à imprimer, selon des formats prédéterminés tels que PostScript® et PDF (Portable Document Format en anglais ou Format Portable de Document en français) ;
- une file d'attente d'impression 3.3, qui identifie des travaux d'impression en cours ou à effectuer. La file d'attente d'impression fournit des identifiants JobId aux travaux d'impression à effectuer ;
- un service d'impression 3.4 qui reçoit des requêtes d'impression en provenance des clients d'impression 1.2, 1.3 et 1.4 via le réseau de communication 1.1.

Le module applicatif 3.1 est interconnecté avec le module interpréteur 3.2 via une interface 3.9. Le module applicatif 3.1 est interconnecté avec la file d'attente d'impression 3.3 via une interface 3.10. La file d'attente d'impression 3.3 est interconnectée avec le service d'impression 3.4 via une interface 3.11.

Le service d'impression 3.4 comprend un module 3.5 de gestion de données échangées selon un mode RAW (ou mode brut), pour lequel des données brutes représentant les pages du document sont transmises par un client d'impression via une connexion TCP/IP. Le module 3.5 de gestion de données échangées selon le mode RAW est connecté à un premier port TCP/IP 3.7, par exemple le port 9100, via une interface 3.12.

Le service d'impression 3.4 comprend en outre un module 3.6 de gestion de données échangées selon le protocole UPnP (Universal Plug and Play en anglais), tel que défini dans la norme ISO/IEC 29341-1:2008. Le module 3.6 de gestion de données échangées selon le protocole UPnP est connecté à au moins un second port TCP/IP 3.8, par exemple le port 5900, via une interface 3.13. Le service d'impression 3.4 peut comporter des modules de gestion de données échangées selon d'autres protocoles.

Le service d'impression 3.4 reçoit, via l'interface 3.13, des messages transmis par un client d'impression selon le protocole UPnP. Par exemple, sur réception d'un message CreateURIJob du service PrintEnhanced :1 selon la norme UPnP, le service d'impression 3.4 va créer un travail d'impression. Ce travail d'impression est alors associé à un fichier, stocké à une adresse fournie dans le message CreateURIJob. Un identifiant JobId de travail d'impression va alors être attribué par la file d'attente d'impression 3.3, et le module interpréteur 3.2 va en être informé. Le module interpréteur 3.2 requiert alors d'obtenir auprès du client d'impression les premiers octets du fichier, de manière à obtenir les informations de l'en-tête 4.1 du fichier. Le format utilisé pour décrire le document étant précisé dans cet en-tête 4.1, l'interpréteur 3.2 peut déterminer s'il peut interpréter le fichier.

Le service d'impression 3.4 transmet des messages UPnP via l'interface 3.13. Par exemple, sur requête du module interpréteur 3.2, le service d'impression 3.4 transmet une requête HTTP GET référant à un tronçon, c'est-à-dire à une partie, du fichier décrivant le document à imprimer, pour lequel un travail d'impression a été créé suite à la réception d'un message CreateURIJob. Des requêtes HTTP GET permettent au module interpréteur 3.2 d'obtenir le fichier par tronçons, ce qui permet de limiter l'utilisation des ressources mémoires de l'imprimante.

L'architecture de la Fig.3 montre que le service d'impression 3.4 et le module interpréteur 3.2 communiquent via la file d'attente d'impression 3.3 et le module applicatif 3.1. Des variantes d'interconnexion de ces modules sont possibles sans modifier le principe général de la présente invention. Par exemple, le service d'impression 3.4 et le module interpréteur 3.2 peuvent communiquer directement via une interface dédiée.

De nos jours, le format majoritairement adopté pour échanger des documents non modifiables est le format PDF développé par la société Adobe Systems, désormais normalisé sous la référence ISO 32000. Un fichier au format PDF décrit un document, à visualiser ou à imprimer, et est constitué comme présenté en Fig. 4. Ainsi un fichier 4.0 au format PDF comprend :
- un en-tête 4.1 (header en anglais), qui fournit des informations sur le format utilisé pour décrire le document. Par exemple, cet en-tête indique que le format est le PDF version 1.4 ;
- un corps 4.2 (body en anglais), qui fournit des objets décrivant différents éléments constituant le contenu du document, sa mise en forme, etc.;
- une table de références 4.3 (référence table en anglais, aussi appelée cross-référence table), qui fournit une information de localisation, par rapport au début du fichier, de chacun des objets situés dans le corps 4.2 et qui permet un accès aléatoire, c'est-à-dire non séquentiel, à ces objets ;
- une queue 4.4 (trailer en anglais), qui fournit une information de localisation de la table de références 4.3 par rapport au début du fichier, fournit une référence à l'objet Catalog qui est le point d'entrée du document et contient en outre un dictionnaire qui fournit des informations concernant l'auteur du document, la date de création du fichier, etc.

Lorsqu'un interpréteur doit interpréter une référence dans un fichier, il poursuit la lecture du fichier à l'endroit vers lequel pointe la référence. Il effectue ainsi un saut d'un endroit du fichier à un autre. En présence de références, on n'accède pas au fichier de manière séquentielle, mais de manière aléatoire.

Afin d'interpréter un document décrit au format PDF, il faut donc rechercher la table des références 4.3 et reconstituer le document à partir des objets contenus dans le corps 4.2 en se référant à la table des références 4.3 pour les obtenir.

En utilisant un tel format de données, on obtient un fichier plus compact qu'avec le format PostScript® : dans le cas où un même objet, comme une image par exemple, est instancié dans plusieurs pages d'un document, un fichier au format PostScript® doit incorporer une copie de l'objet pour chacune de ces instances ; un fichier au format PDF, quant à lui, n'incorpore qu'une seule fois l'objet et crée une référence par instance. Transmettre un fichier au format PostScript® implique alors une plus grande consommation de bande passante entre le client d'impression et l'imprimante qu'un fichier au format PDF pour un même document, un fichier au format PostScript® étant d'une manière générale plus volumineux qu'un fichier au format PDF pour le même document. On ne tire donc pas bénéfice, lors de l'impression, de la compacité apportée par le format PDF.

Dans la suite de la description, on s'attache plus particulièrement à une réalisation de l'invention pour l'impression d'un document décrit dans le format PDF. La présente invention ne se limite cependant pas aux structures de fichier selon le format PDF, mais à toute structure de fichier impliquant un parcours non séquentiel du fichier.

La Fig. 5 illustre un algorithme mis en oeuvre par un client d'impression, selon un mode de réalisation de l'invention.

Lors d'une étape 5.1, le client d'impression reçoit un ordre d'impression d'un document. Le document à imprimer est décrit dans un fichier selon le format PDF, tel que représenté en Fig. 4.

Lors d'une étape 5.2 suivante, une imprimante est sélectionnée. Cette opération est par exemple réalisée en interaction avec l'utilisateur.

Lors d'une étape 5.3 suivante, le client d'impression transmet à l'imprimante un ordre de création de travail d'impression. Par exemple, un message CreateURIJob du service PrintEnhanced :1 selon la norme UPnP est utilisé. L'adresse où le fichier est stocké sur le client d'impression est communiquée dans le message. Le client d'impression ouvre alors, à l'imprimante, l'accès au fichier.

Le client d'impression va alors permettre, dans une étape 5.10, à l'imprimante d'accéder aléatoirement au fichier via le réseau de communication 1.1. Le fichier reste donc localisé sur le client d'impression et le client d'impression permet à l'imprimante de parcourir le fichier à distance.

Dans le cas où le fichier décrit le document à imprimer dans un langage interprété, l'interprétation du fichier par l'imprimante va déclencher des accès aléatoires au fichier via le réseau de communication 1.1. Le client d'impression permet ainsi à l'imprimante de parcourir le fichier à distance en récupérant, c'est-à-dire en lisant, des tronçons du fichier en fonction des besoins de l'interprétation.

Les étapes 5.4 à 5.7 décrivent plus particulièrement un mode de réalisation dans lequel des accès aléatoires à un fichier PDF stocké sur le client d'impression sont effectués, ces accès étant effectués par l'imprimante pour l'interprétation de ce fichier.

Lors de l'étape 5.4, le client d'impression reçoit une requête relative à la taille du fichier décrivant le document à imprimer. En d'autres termes, le client d'impression reçoit de l'imprimante une requête visant à obtenir la taille du fichier PDF. Cette requête prend par exemple, dans une mise en oeuvre basée sur la norme UPnP, la forme d'une requête HTTP HEAD contenant un en-tête Content-Length.

Lors de l'étape 5.5 suivante, le client d'impression transmet en réponse à la requête reçue un message contenant la taille du fichier PDF.

Lors de l'étape 5.6 suivante, le client d'impression reçoit de l'imprimante une requête visant à obtenir un tronçon du fichier PDF, identifié par exemple par un octet de début et un octet de fin, ces octets exprimant un décalage (offset en anglais) par rapport au début du fichier. Cette requête prend par exemple, dans une mise en oeuvre basée sur la norme UPnP, la forme d'une requête HTTP GET dont le champ Range Bytes indique l'octet de début et l'octet de fin du tronçon de fichier requis. Le client d'impression doit alors comporter un serveur HTTP/1.1 supportant un en-tête Range Bytes, tel que décrit dans le chapitre 14.35 de la RFC 2616.

Lors de l'étape 5.7 suivante, le client d'impression transmet à l'imprimante le tronçon requis. On reboucle ensuite sur l'étape 5.6 jusqu'à ce que l'impression du document soit effectuée. Le client d'impression ferme alors l'accès au fichier.

La Fig. 6 illustre un algorithme mis en oeuvre par une imprimante, selon un mode de réalisation de l'invention.

Lors d'une étape 6.1, l'imprimante reçoit en provenance d'un client d'impression un ordre de création de travail d'impression. En d'autres termes, l'imprimante reçoit une indication qu'un document est à imprimer, et qu'un fichier décrivant ce document est accessible à une adresse donnée. Cet ordre prend par exemple, dans une mise en oeuvre basée sur la norme UPnP, la forme d'une requête CreateURIJob dont le champ SourceURI indique l'adresse du fichier.

Lors d'une étape 6.2 suivante, l'imprimante crée un travail d'impression, en réponse à l'ordre reçu lors de l'étape 6.1. La file d'attente d'impression 3.3 attribue notamment un identifiant JobId au travail d'impression, et le module interpréteur 3.2 est informé que le travail d'impression a été créé.

Pour obtenir les informations nécessaires à l'impression du document, lors d'une étape 6.10, l'imprimante va accéder aléatoirement, via le réseau de communication, au fichier stocké sur le client d'impression et dont l'adresse a été communiquée lors de l'étape 6.1.

Dans le cas où le fichier décrit le document à imprimer dans un langage interprété, l'interprétation du fichier va déclencher des accès aléatoires au fichier, par l'imprimante, via le réseau de communication 1.1. Le fichier reste donc localisé sur le client d'impression et l'imprimante parcourt le fichier à distance en récupérant, c'est-à-dire en lisant, des tronçons du fichier en fonction des besoins de l'interprétation.

Les étapes 6.3 à 6.9 décrivent plus particulièrement un mode de réalisation dans lequel des accès aléatoires à un fichier PDF stocké sur le client d'impression sont effectués, ces accès étant effectués par l'imprimante pour l'interprétation de ce fichier.

Lors de l'étape 6.3, l'imprimante obtient la taille du fichier décrivant le document à imprimer. En pratique, l'imprimante transmet au client d'impression une requête visant à obtenir la taille du fichier. Cette requête prend par exemple, dans une mise en oeuvre basée sur la norme UPnP, la forme d'une requête Head contenant un en-tête de type Content-Length. L'imprimante se met alors en attente d'une réponse de la part du client d'impression.

Lors d'une étape (non représentée sur la Fig. 6), le module interpréteur 3.2 peut requérir d'obtenir auprès du client d'impression les premiers octets du fichier, de manière à obtenir l'en-tête 4.1 du fichier et déterminer le format utilisé pour décrire le document. Si le format déterminé est un format basé sur le format PDF, alors on poursuit l'algorithme avec l'étape 6.4 ; sinon, une interprétation selon un autre format doit être faite, et il est mis fin à l'algorithme de la Fig. 6.

Lorsque l'imprimante a obtenu la taille du fichier, lors de l'étape 6.4 suivante, l'imprimante détermine un tronçon du fichier dans lequel la table de références 4.3 se trouve.

Dans une première variante de réalisation, l'imprimante peut parcourir, par tronçons, le fichier jusqu'à trouver un mot-clef marquant l'endroit où se trouve la table de références 4.3. Dans le cas d'un fichier PDF, le mot-clef xref marque le début de la table de références 4.3. L'imprimante requiert alors des tronçons du fichier auprès du client d'impression. Chaque tronçon analysé peut ensuite être effacé de manière à préserver les ressources mémoires de l'imprimante. L'imprimante peut ainsi parcourir le fichier à partir du début ou à partir d'un autre point.

Dans une seconde variante de réalisation, l'imprimante parcourt le fichier en partant de la fin, indiquée par les caractères %%EOF dans le cas d'un fichier PDF. Elle remonte alors en direction du début du fichier à la recherche d'un mot-clef donné. Dans le cas d'un fichier PDF, ce mot-clef est startxref dans la queue 4.4. Ce mot-clef est suivi d'une information de décalage (offset en anglais), par rapport au début du fichier, fournissant une indication quant à la localisation de la table de références 4.3 dans le fichier. L'imprimante peut alors déterminer le ou les tronçon(s) du fichier nécessaire(s) pour obtenir la table de références 4.3.

Lors de l'étape 6.5 suivante, l'imprimante requiert auprès du client d'impression le ou les tronçon(s) du fichier nécessaire(s) pour obtenir la table de références 4.3, et se met en attente d'une réponse.

Lorsque l'imprimante a obtenu ce ou ces tronçon(s) auprès du client d'impression, l'imprimante obtient la table de références 4.3. De manière préférentielle, dans la mesure où les capacités mémoires de l'imprimante le permettent, cette table de références 4.3 est conservée pendant toute la durée du traitement lié au travail d'impression, car elle est fréquemment accédée par l'interpréteur 3.2 lors de l'interprétation du fichier PDF.

Lors de l'étape 6.6 suivante, l'imprimante détermine, d'après la table de références 4.3, la localisation des objets nécessaires à l'impression de chaque page ou groupe de pages du document à imprimer. L'imprimante détermine alors le ou les tronçon(s) du fichier nécessaire(s) pour obtenir ces objets ou toute portion du fichier nécessaire à la définition de la page considérée ou du groupe de pages considéré.

Lors de l'étape 6.7 suivante, l'imprimante requiert auprès du client d'impression le ou les tronçon(s) du fichier nécessaire(s) pour obtenir ces objets ou cette portion du fichier nécessaire à la définition de la page considérée ou du groupe de pages considéré, et se met en attente d'une réponse. L'imprimante requiert ainsi des tronçons auprès du client d'impression, en fonction des références contenues dans le fichier.

Lors de l'étape 6.8 suivante, l'imprimante rastérise les tronçons obtenus auprès du client d'impression, c'est-à-dire qu'elle convertit les tronçons en une matrice de points (bitmap en anglais) imprimable.

Lorsque l'imprimante a obtenu ce ou ces tronçon(s) auprès du client d'impression, lors de l'étape 6.9, l'imprimante peut ordonner l'impression de la page considérée ou du groupe de pages considéré.

Les étapes 6.6, 6.7, 6.8 et 6.9 sont alors réitérées jusqu'à l'impression de l'ensemble des pages du document à imprimer, ce qui met fin à l'impression et permet de libérer les ressources associées.

Préférentiellement, la taille de chaque tronçon requis auprès du client d'impression est déterminée en fonction des ressources mémoires disponibles sur l'imprimante. Cela permet de limiter les échanges sur le réseau de communication 1.1 et donc de limiter la surcharge (overhead en anglais) liée à la signalisation et au transport des données sur le réseau de communication 1.1. La taille de chaque tronçon peut aussi être déterminée en fonction de la taille de la partie de fichier recherchée par le module interpréteur 3.2 pour effectuer son interprétation, en se limitant par exemple strictement aux objets recherchés. Cela permet de limiter l'utilisation des ressources mémoires de l'imprimante pour l'impression du document et donc de rendre disponibles ces ressources à d'autres applications.

Cette approche de récupération du fichier par tronçons en fonction des références qu'il contient permet à l'imprimante de réduire la consommation de ressources mémoires pour l'impression du document. Une fois qu'un tronçon a été analysé, il peut être supprimé de la mémoire de l'imprimante. La présente invention permet l'impression de tout document dont le traitement par une imprimante nécessite un accès non séquentiel aux données, le format PDF n'étant qu'un exemple d'un tel format. Cela permet notamment à une imprimante à capacités mémoires réduites d'imprimer un tel document. On évite ainsi que le client d'impression ait besoin de recourir à une conversion dans un format transmissible en mode connecté (streaming mode en anglais) et on préserve ainsi la bande passante du réseau de communication.

## Revendications

1. Imprimante (1.6;1.7) destinée à être connectée à un réseau de communication (1.1) comportant un client d'impression (1.2;1.3;1.4), le client d'impression étant prévu pour stocker, pour chaque document à imprimer, un fichier (4.0) décrivant ledit document à imprimer, **caractérisée en ce qu'**elle comporte des moyens pour accéder aléatoirement, via le réseau de communication, au fichier stocké par le client d'impression et qui décrit le document à imprimer.

2. Imprimante selon la revendication 1, **caractérisée en ce qu'**elle comporte des moyens (3.2) pour interpréter le fichier auquel elle accède par les moyens d'accès lorsque ledit fichier décrit le document à imprimer dans un langage interprété.

3. Imprimante selon l'une quelconque des revendications 1 et 2, **caractérisée en ce qu'**elle comporte :
- des moyens pour transmettre au client d'impression une requête afin d'obtenir un tronçon du fichier décrivant le document à imprimer ;
- des moyens pour recevoir ledit tronçon.

4. Imprimante selon les revendications 2 et 3, **caractérisée en ce que**, pour accéder à un objet du fichier décrivant le document à imprimer, ledit objet décrivant au moins un élément dudit document à imprimer, l'imprimante comporte des moyens pour déterminer un tronçon dudit fichier en fonction d'une référence audit objet contenue dans ledit fichier.

5. Imprimante selon la revendication 4, **caractérisée en ce que**, pour obtenir la référence à un objet du fichier décrivant le document à imprimer, elle comporte des moyens pour déterminer un tronçon incluant une table de références (4.3) indiquant une localisation dudit objet dans ledit fichier.

6. Imprimante selon la revendication 5, **caractérisée en ce que** les moyens pour déterminer un tronçon incluant la table de références comportent :
- des moyens pour obtenir, auprès du client d'impression, la taille dudit fichier ;
- des moyens pour déterminer, en fonction de la taille obtenue, un tronçon incluant une information indiquant une localisation de la table de références ;
- des moyens pour obtenir, auprès du client d'impression, ledit tronçon incluant la table de références en fonction de l'information indiquant la localisation de la table de références.

7. Imprimante selon l'une quelconque des revendications 5 et 6, **caractérisée en ce que**, pour une page ou un groupe de pages à imprimer dudit document, sont activés des moyens pour déterminer, d'après ladite table de références obtenue, au moins un tronçon dudit fichier incluant au moins un objet référant à ladite page ou audit groupe de pages à imprimer.

8. Client d'impression (1.2;1.3;1.4) destiné à être utilisé dans un réseau de communication (1.1) comportant au moins une imprimante (1.6;1.7), le client d'impression étant prévu pour stocker, pour chaque document à imprimer, un fichier (4.0) décrivant ledit document à imprimer, **caractérisé en ce qu'**il comporte des moyens pour permettre à l'imprimante d'accéder aléatoirement, via le réseau de communication, au fichier stocké par le client d'impression et qui décrit le document à imprimer.

9. Client d'impression selon la revendication 8, **caractérisé en ce qu'**il comporte :
- des moyens pour recevoir une requête en provenance de l'imprimante, afin que celle-ci puisse obtenir un tronçon du fichier qui décrit le document à imprimer, et
- des moyens pour transmettre lesdits tronçons à l'imprimante.

10. Procédé mis en oeuvre par une imprimante (1.6;1.7) dans un réseau de communication (1.1) comportant en outre un client d'impression (1.2;1.3;1.4), le client d'impression étant prévu pour stocker, pour chaque document à imprimer, un fichier (4.0) décrivant ledit document à imprimer , **caractérisé en ce qu'**il comprend une étape (6.10) d'accès aléatoire, via le réseau de communication, de l'imprimante au fichier stocké sur le client d'impression et qui décrit le document à imprimer.

11. Procédé mis en oeuvre par un client d'impression (1.2;1.3;1.4) dans un réseau de communication (1.1) comportant en outre une imprimante (1.6;1.7), le client d'impression étant prévu pour stocker, pour chaque document à imprimer, un fichier (4.0) décrivant ledit document à imprimer, **caractérisé en ce qu'**il comprend une étape consistant à permettre (5.10) à l'imprimante d'accéder aléatoirement, via le réseau de communication, au fichier stocké par le client d'impression et qui décrit le document à imprimer.

12. Système d'impression destiné à être utilisé dans un réseau de communication (1.1), le système d'impression comportant un client d'impression (1.2;1.3;1.4) et une imprimante (1.6;1.7), le client d'impression étant prévu pour stocker, pour chaque document à imprimer, un fichier (4.0) décrivant ledit document à imprimer, **caractérisé en ce que** l'imprimante comporte des moyens pour accéder aléatoirement, via le réseau de communication, au fichier stocké sur le client d'impression et qui décrit le document à imprimer, et **en ce que** le client d'impression comporte des moyens pour permettre à l'imprimante d'accéder aléatoirement, via le réseau de communication, au fichier stocké par le client d'impression et qui décrit le document à imprimer.

13. Procédé mis en oeuvre dans un réseau de communication (1.1) comportant un client d'impression (1.2;1.3;1.4) et une imprimante (1.6;1.7), le client d'impression étant prévu, pour stocker pour chaque document à imprimer, un fichier (4.0) décrivant ledit document à imprimer, **caractérisé en ce que** l'imprimante effectue une étape d'accès aléatoire (6.10), via le réseau de communication, au fichier stocké sur le client d'impression et qui décrit le document à imprimer, et **en ce que** le client d'impression effectue une étape consistant à permettre (5.10) à l'imprimante d'accéder aléatoirement, via le réseau de communication, au fichier stocké sur le client d'impression et qui décrit le document à imprimer.

14. Programme d'ordinateur, **caractérisé en ce qu'**il comprend des instructions pour mettre en oeuvre, lorsque ledit programme est exécuté par un processeur, le procédé d'impression selon la revendication 10 et/ou le procédé selon la revendication 11, ou selon la revendication 13.

15. Moyens de stockage, **caractérisés en ce qu'**ils stockent un programme d'ordinateur comprenant des instructions pour mettre en oeuvre, lorsque ledit programme est exécuté par un processeur, le procédé d'impression selon la revendication 10 et/ou le procédé selon la revendication 11, ou selon la revendication 13.
